# NEUE EUROPÄISCHE PATENTSCHRIFT

(11) **EP 1 018 839 B2**
(45) Veröffentlichungstag und Bekanntmachung des Hinweises auf die Entscheidung über den Einspruch: **20.01.2010**
(45) Hinweis auf die Patenterteilung: 14.09.2005
(21) Anmeldenummer: 99124831.1
(22) Anmeldetag: 14.12.1999
(51) Int. Cl.: H04N 7/18, B60R 1/00

(54) **Verfahren und Einrichtung zur Einsichtnahme des rückwärtigen Beobachtungsraumes bei Kraftfahrzeugen**
Method and apparatus for inspecting the rear observation space of a vehicle
Méthode et appareil d'inspection de l'espace d'observation arrière d'un véhicule

(30) Priorität: 08.01.1999 DE 19900498
(43) Veröffentlichungstag der Anmeldung: 12.07.2000
(73) Patentinhaber: Volkswagen Aktiengesellschaft, 38436 Wolfsburg (DE)
(72) Erfinder: Weis, Tim, 64625 Bensheim (DE); Mai, Rudolf, 38442 Wolfsburg (DE)
(74) Vertreter: Zucker, Volker

(56) Entgegenhaltungen:
- DE-A- 19 816 054
- DE-A1- 4 228 794
- GB-A- 2 137 573
- US-A- 5 027 200
- PATENT ABSTRACTS OF JAPAN vol. 016, no. 082 (M-1215), 27. Februar 1992 (1992-02-27) & JP 03 266740 A (TOSHIBA CORP;OTHERS: 01), 27. November 1991 (1991-11-27)

## Beschreibung

Die Erfindung betrifft ein Verfahren sowie eine Einrichtung zur Einsichtnahme des rückwärtigen, außenspiegelbezogenen Beobachtungsraumes bei Kraftfahrzeugen, bei welchem der besagte Beobachtungsraum über mindestens ein bildaufnehmendes Sensorelement erfaßt und auf mindestens einer Anzeigeeinrichtung abgebildet wird.

Zur Beobachtung des rückwärtigen Beobachtungsteilraumes bei Kraftfahrzeugen werden Innenspiegel und Außenspiegel verwendet. Der Innenspiegel gewährt durch die gesamte Innenkonstruktion der Fahrzeugkarosse selbst, nebst Innenverkleidungen, nur einen eingeschränkten rückwärtigen Blick.

Daher sind in Kraftfahrzeugen auch die Anordnung sogenannter Außenspiegel vorgesehen, wobei jeweils ein Außenspiegel an der Beifahrer-, als auch an der Fahrerseite angeordnet ist. Die Spiegel sind dabei so einzustellen, daß der Fahrzeugführer durch beide Spiegel einen quasi ergänzenden Blick nach hinten hat. Der Blick nach hinten konzentriert sich dabei im wesentlichen auf einen Bereich, welcher einen relativ kleinen Winkelbereich darstellt, wobei sich der eine Schenkel dieses Winkels an die Fahrzeugkarosse anschmiegt. Dieser nach hinten gerichtete Bereich soll aber einen am Fahrzeug seitlich entlang laufenden Teilraum erfassen, der im wesentlichen weitreichend und möglichst geradlinig nach hinten gerichtet ist. Hierdurch entsteht ein zum Innenspiegel ergänzter Bereich, der das Umfeld um das Fahrzeug herum nach hinten gerichtet absichert, auch mit Blick auf benachbarte Fahrspuren und auf ggf. sich annähemde Fahrzeuge. Um einen möglichst weitreichenden Blick nach hinten zu haben, ist dieser Bereich somit relativ spitzwinklig.

Darüber hinaus kennt der Fahrzeugführer jedoch den Bereich des sogenannten toten Winkels, der von einem üblichen Außenrückspiegel nicht mehr erfaßt werden kann. Dies ist derjenige Bereich, der im wesentlichen den Raum seitlich direkt neben dem Fahrzeug betrifft. Oftmals haben jedoch gefährliche Fahrsituationen ihre Ursache in der nur mangelhaften Beobachtung dieses sogenannten "toten Winkelbereiches".

So sind vielfach geteilte Außenspiegel bekannt, bei welchen ein zweiter Spiegel oder ein zweites Spiegelsegment für die Überwachung, d. h. die zusätzliche Einsichtnahme des sog. "toten Winkelbereiches" dient. Diese Spiegel sind in der Regel kleiner und gewähren somit nur eine Einsichtnahme in einen relativ kleinen Bereich des sog. toten Winkels. Um dies ein wenig zu verbessern, ist der besagte zweite Spiegel bzw. das zweite Spiegelsegment oftmals ein wenig gewölbt. Dies führt jedoch zu einer Verzerrung, die den Nachteil hat, daß Entfernungen und Abstände nicht mehr korrekt eingeschätzt werden können.

Ein auf diesem Prinzip beruhender Außenspiegel ist beispielsweise aus der DE 296 09 121 U1 bekannt. Hierbei ist zwar der zweite kleinere Spiegel getrennt einstellbar, jedoch erfaßt er dennoch nur einen sehr kleinen Raumwinkelbereich.

Darüber hinaus gibt es eine Reihe von elektronischen Lösungen, bei welchen jedoch der Zentralpunkt zunächst in der elektronischen Realisierung der Rückspiegelfunktion liegt. So ist beispielsweise aus der EP 0 825 064 A1 eine Bildsensoranordnung bekannt zur Einsichtnahme des nicht direkt überblickbaren Bereiches bei Kraftfahrzeugen. Die Bildsensoren sind dabei auf der Frontseite des Fahrzeuges installiert und sollen eine Umsicht im Hinblick auf die Fahrzeugkarosseriebegrenzungen geben. Dies mag als Einparkhilfe dienlich sein, jedoch ist eine solche Anordnung für die Erfassung des normalerweise vom Rückspiegel erfaßten Teilraumes ungeeignet, zumindest in dieser dort dargestellten Form.

Aus der JP-A-0 3 266 740 (PAJ) ist eine Spiegel-Klappvorrichtung für eine rückwärtige Kamera bekannt, die wahlweise die Beobachtung eines ersten oder zweiten Winkelbereichs erlaubt.

In der WO 96/38319 ist ebenfalls eine elektronische Realisierung der Rückspiegelfunktion angegeben. Hierbei steht jedoch auch die einfache und normale Einsichtnahme des rückwärtigen Raumes im Vordergrund.

Das gleiche gilt für die EP 0 751 041 A2, bei welcher im wesentlichen die Beobachtung der Fahrzeugbegrenzungen im Vordergrund steht. Eine direkte Rückspiegelfunktion, welche elektronisch realisiert wird, ist hierbei nicht angegeben.

Der Erfindung liegt somit die Aufgabe zugrunde, ein Verfahren sowie eine Einrichtung der gattungsgemäßen Art dahingehend weiterzubilden, daß der rückwärtige, insbesondere der außenspiegelbezogenen Beobachtungsraum bei Kraftfahrzeugen zuverlässig und unter Vermeidung von "toten Winkelbereichen" erfaßt werden kann.

Die gestellte Aufgabe wird durch ein Verfahren mit den Merkmalen des Patentanspruches 1 gelöst.

Weitere vorteilhafte Ausgestaltungen des erfindungsgemäßen Verfahrens sind in den abhängigen Ansprüchen 2 bis 4 angegeben.

Hinsichtlich einer Einrichtung wird die gestellte Aufgabe durch die Merkmale des Patentanspruches 5 gelöst.

Weitere vorteilhafte Ausgestaltungen der erfindungsgemäßen Einrichtung sind in den abhängigen übrigen Ansprüchen angegeben.

Das Wesen der Erfindung besteht nun darin, daß die rückspiegelbezogene Beobachtung des nach hinten gerichteten Beobachtungsraums des Kraftfahrzeuges in allen, d. h. auch den kritischen Winkelbereichen verbessert gelöst wird. Dabei wird erfindungsgemäß vorgeschlagen, daß der sog. "tote Winkelbereich" in einem größeren Winkelbereich erfaßt wird, als der geradlinig nach hinten gerichtete Bereich, wobei dann die beiden besagten erfaßten Winkelbereiche in einem hierzu umgekehrt proportionalen Breitenverhältnis nebeneinander abgebildet bzw. angezeigt werden. Dies bedeutet in praxi, daß mit Hilfe der bildaufnehmenden Sensorelemente zunächst einmal der erste spitzwinklige, weit nach hinten gerichtete Winkelbereich, der sich seitlich direkt an das Kraftfahrzeug anschließt, erfaßt wird. Darüber hinaus wird des weiteren der Bereich des sog. toten Winkels zusätzlich erfaßt. Dabei wird der Bereich des toten Winkels nunmehr nicht mehr spitzwinklig erfaßt, sondern in einem erheblich größeren Winkelbereich, als der erste Beobachtungsraum. Damit erfolgt eine sehr umfassende und weiträumige Erfassung des zweiten Beobachtungsraums, des sogenannten "toten Winkelbereiches". Dieser zweite Beobachtungsraum wird dabei so erstreckt, daß er dort endet, wo der optische Erfassungsbereich des Sichtfeldes des Kraftfahrzeugführers beginnt. Somit kann der Fahrzeugführer elektronisch unterstützt, nunmehr den gesamten Bereich neben dem Fahrzeug bis nach hinten angrenzend zum ersten Beobachtungsraum erfassen und zwar lückenlos. Dabei wiederum wird die Abbildung der beiden Beobachtungsräume auf der Anzeigeeinrichtung in einem umgekehrt proportionalen Breitenverhältnis zu ihrem Winkelverhältnis generiert. Das heißt, der relativ kleinwinklige, also spitzwinklige, im wesentlichen nach hinten gerichtete erste Beobachtungsbereich wird auf einem relativ breiten Anzeigeabschnitt oder einem Displaysegment abgebildet, währenddem der weit großwinkligere zweite Beobachtungsraum des sog. toten Winkels, auf einem entsprechend kleineren Anzeigesegment neben dem anderen Anzeigesegment abgebildet wird. Hierdurch wird trotz des nur kleinen Darstellungsbereiches des toten Winkels, dennoch der gesamte erfaßte großwinklige "tote Winkelbereich" dargestellt und zwar vollständig. Auf diese Weise kann das Anzeigesegment für die Beobachtung des toten Winkels, wie bereits gesagt, kleiner ausgeführt sein, wobei dies aber nicht zu Lasten des erfaßten übrigen Winkelbereiches geht. Dies ist lediglich dadurch realisierbar, daß hier nun bildaufnehmende Sensorelemente in entsprechender Weise eingesetzt werden.

In einer Ausgestaltung der Erfindung sind somit pro Außenspiegelsubstitution mindestens zwei bildaufnehmende Sensorelemente vorgesehen. Dabei wird der erfaßte Winkelbereich der beiden erfaßten Zonen bzw. Beobachtungsräume so festgelegt werden, daß beide Bereiche aneinander angrenzen. Hierdurch wird eine lückenlose Beobachtung des nach hinten gerichteten Beobachtungsraumes beim Kraftfahrzeug gewährleistet.

Vorrichtungsgemäß bzw. einrichtungsgemäß wird die beschriebene Vorgehensweise dadurch realisiert, daß wie bereits ausgeführt, mindestens zwei bildaufnehmende Sensorelemente für jede Außenspiegelsubstitution vorgesehen sind. Eine weitere Möglichkeit besteht auch darin, ein bildaufnehmendes Sensorelement zu verwenden, bei dem jedoch von einer entsprechend gesplitteten optischen Einrichtung zwei voneinander getrennte Bilderfassungszonen des Bilderfassungselementes des Sensorelementes projiziert werden. Eine entsprechende Auswertung kann diese Projektion dann unterstützen und die entsprechenden Bildpunkte auch entsprechend separat verarbeiten und auch separat in der oben dargestellten Weise auf der gesplitteten oder zweisegmentigen Anzeigeeinrichtung zur Anzeige bringen

In weiterer vorteilhafter Ausgestaltung der Erfindung ist dabei das bildaufnehmende Sensorelement mit einer Auswerteeinrichtung bzw. mit Auswertemitteln elektronischer Art verbunden, die die Bildauswertung vomehmen.

Nachfolgend wird die Erfindung anhand eines Ausführungsbeispieles näher beschrieben. Die zugehörigen Zeichnungen zeigen
- Figur 1: eine Fahrzeugkontur in Draufsicht mit Darstellung der überwachten Beobachtungsräume.
- Figur 2: eine Darstellung auf einer Anzeigeeinrichtung.

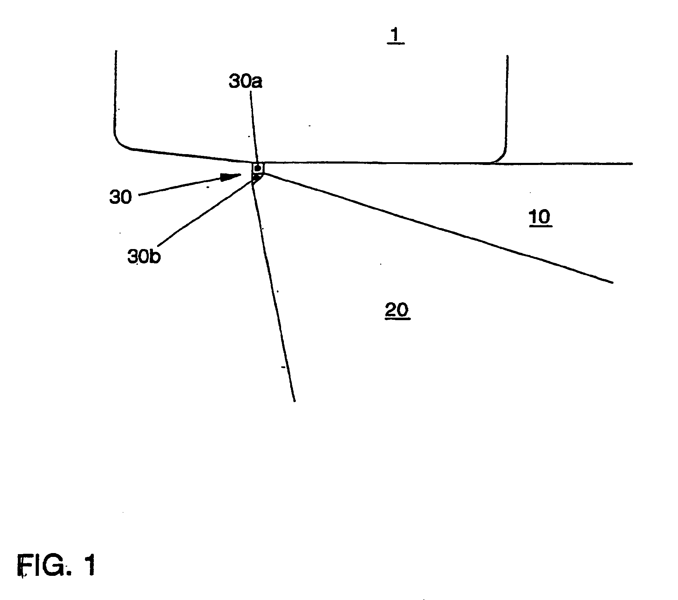

Figur 1 zeigt in Draufsicht auf dem Grundriß eines Kraftfahrzeuges 1 die grundsätzliche Darstellung zweier Beobachtungsräume 10, 20. Der Beobachtungsraum 10 überstreicht einen nach hinten gerichteten, relativ spitzwinkligen Winkelbereich, der eine relativ geradlinige, am Fahrzeug relativ dicht vorbeigeführte Sicht nach hinten gewährt. Dieser Beobachtungsraum 10 schmiegt dabei einen Schenkel des Winkels geradlinig am Fahrzeug vorbei und der andere Schenkel spreizt sich davon spitzwinklig ab. Dadurch entsteht zunächst eine gerade Sicht nach hinten, aber auch Teilbereiche, die sich hinter dem Fahrzeug, beispielsweise auf herannahende Fahrzeuge auf anderen Fahrspuren richten.

An diesen zweiten Schenkel des Beobachtungsraumes 10 schmiegt sich nun der eine Schenkel des zweiten Beobachtungsraumes 20, des sog. toten Winkelbereiches an. Von da aus spreizt sich der zweite Schenkel des zweiten Beobachtungsraumes relativ weit und somit erheblich stumpfwinkliger, als der Winkel, der von dem ersten Beobachtungsraum 10 überspannt wird, zur Seite hin ab.

Die Erfindung gewährt somit eine relativ lückenlose Erfassung des zweiten Beobachtungsraumes 20, die soweit geht, daß der besagte zweite Schenkel des erfaßten "toten Winkelbereiches" sich bereits an das Gesichtsfeld des nach vorne blickenden Fahrzeugführers anschmiegt. Somit entsteht eine lückenlose Überwachung, sowohl des seitlichen Fahrzeugraumes, als auch des Raumes nach hinten. Eine solche winkelmäßige Streckung des zweiten Beobachtungsraumes 20 ist mit starren optischen Mitteln, wie Spiegelgläsern, selbst in gewölbter Art, wenn überhaupt nur schwer darstellbar. Mit bildaufnehmenden Sensorelementen 30, beispielsweise einer Kamera, ist dies jedoch überhaupt kein Problem, was im besonderen der Vorteil der angegebenen Erfindung ist.

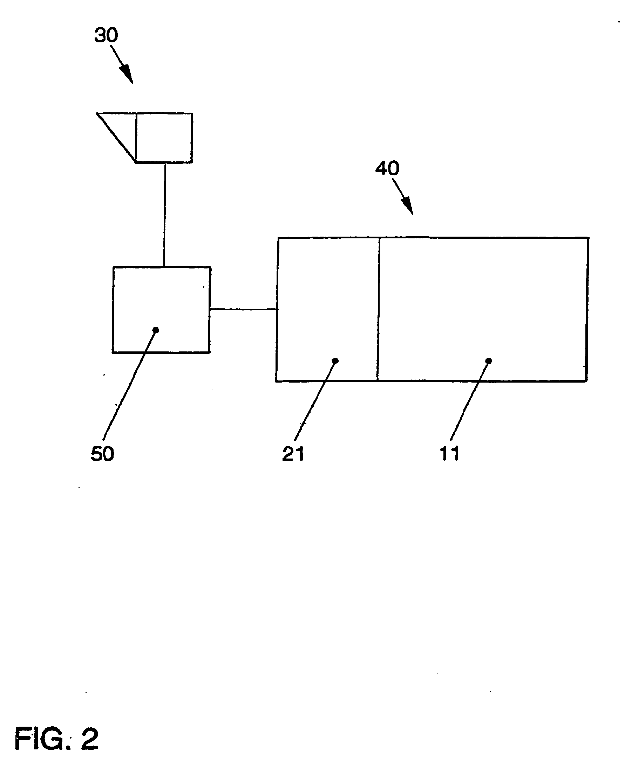

Realisiert wird dies, wie oben bereits angedeutet, durch eine Kamera 30, die entweder ein geteiltes Bilderfassungsmodul hat, welche wiederum mit zwei verschiedenen optischen Systemen korrespondieren, oder aber es können zwei Kameraelemente 30a, 30b sein, mit unabhängigen Bildbearbeitungselementen. In beiden Fällen ist eine Auswerteeinrichtung notwendig, die die Bildverarbeitung durchführt und die erfaßten Bilder in der erfindungsgemäß dargestellten Weise auf einer entsprechenden Anzeigeeinrichtung 40 (Fig. 2) darstellt.

Das Wesen der Erfindung besteht darin, daß der zweite Beobachtungsraum 20, der sogenannte "tote Winkelbereich" in einem größeren Winkelbereich erfaßt wird, als der geradlinig nach hinten gerichtete erste Beobachtungsraum 10, wobei darüber hinaus nun die beiden erfaßten Winkelbereiche in einem hierzu umgekehrt proportionalen Breitenverhältnis nebeneinander auf der Anzeigeeinrichtung 40 angezeigt werden.

Figur 2 zeigt hierzu die Darstellung auf dem Display 40. Der vorstehend in Figur 1 dargestellte erste Beobachtungsbereich 10, mit relativ kleinem Beobachtungswinkel, wird auf einem breiteren Anzeigesegment 11 dargestellt, während dem der relativ großwinklig zweite Beobachtungsraum 20 auf einem schmaleren Anzeigesegment 21 dargestellt wird. Mit Hilfe der elektronischen Mittel ist es jedoch anders, als bei starren optischen Spiegel, nunmehr möglich, dies auch in der Form ohne Einschränkung des Winkelbereiches zu realisieren. Ein starrer Spiegel gewährt natürlich bei kleiner Abmessung, also kleinerer Spiegel bzw. Darstellungsfläche, auch nur einen kleinen Raumwinkel. Bei dem Einsatz von Kameraelementen insbesondere zum zusätzlichen Erfassen des Bereiches des toten Winkels, ist dies jedoch anders. Die Bildverarbeitung 50 kann nahezu beliebig Winkelbereiche erfassen, die relativ unabhängig von der dann dargestellten Breite auf dem Display sind. Daher ist die Verwendung von Kameraelementen 30 erheblich effektiver, insbesondere zur Beobachtung des zweiten Beobachtungsraumes 20, als dies Spiegelgläser, selbst sogar gewölbte Spiegelgläser realisieren können.

Die entsprechende Darstellung übernimmt dann, wie oben bereits gesagt, eine entsprechende elektronische Nachbearbeitungseinrichtung 50, die der Kamera 30 bzw. den Kameras 30a, 30b nachgeschaltet ist.

Durch die erfindungsgemäße Verfahrensweise bzw. die erfindungsgemäße Vorrichtung können Außenspiegel der herkömmlichen Bauart, nämlich mit festen Spiegelgläsern, völlig substituiert werden und darüber hinaus ergibt sich eine Beobachtungsmöglichkeit nach hinten, die durch starre Spiegelgläser nicht realisierbar ist.

Die besondere Trennung der Beobachtungsräume 10, 20 gibt überdies eine lückenlose Darstellung des für den Fahrer wichtigen Raumes neben und hinter dem Fahrzeug während des normalen Fahrbetriebes.

Insgesamt wird der Fahrbetrieb mit Hilfe dieser erfindungsgemäßen Verfahrensweise bzw. dieser erfindungsgemäß Einrichtung deutlich sicherer.

### BEZUGSZEICHEN

- 1: Fahrzeug
- 10, 20: Beobachtungsraum
- 11, 21: Anzeigesegment
- 30: bildaufnehmendes Sensorelement; Kamera
- 30a, 30b: Kameraelement
- 40: Anzeigeeinrichtung, Display
- 50: Nachbearbeitungseinrichtung, Bildverarbeitung

## Patentansprüche

1. Verfahren zur Einsichtnahme eines rückwärtigen auf einen einzelnen Außenspiegel bezogenen Beobachtungsraumes bei Kraftfahrzeugen, bei welchem der besagte Beobachtungsraum (10, 20) über eine Bilderfassungseinrichtung mit mindestens einem bildaufnehmenden Sensorelement (30) erfasst und auf mindestens einer Anzeigeeinrichtung (40) abgebildet wird, wobei die Bilderfassungseinrichtung so unterteilt ausgeführt ist, dass der außenspiegelbezogene Beobachtungsraum gleichzeitig in mindestens zwei Beobachtungsräume (10, 20) unterteilt wird, welche unterschiedliche Winkelbereiche überstreichen,
**dadurch gekennzeichnet, dass**
der sich direkt seitlich an das Kraftfahrzeug anschließende erste Beobachtungsraum (10) einen kleineren Winkelbereich erfasst, als der sich an den ersten Beobachtungsraum anschließende zweite Beobachtungsraum (20), wobei die beiden Beobachtungsräume (10, 20) auf der Anzeigeeinrichtung (40) zu den von ihnen erfassten Winkelbereichen in einem umgekehrt proportionalen Breitenverhältnis angezeigt werden.

2. Verfahren nach Anspruch 1, **dadurch gekennzeichnet, dass** die Beobachtungsräume (10, 20) getrennt voneinander erfasst werden.

3. Verfahren nach Anspruch 1, **dadurch gekennzeichnet, dass** die Beobachtungsräume (10, 20) gemeinsam erfasst und mittels einer optischen Einrichtung und einer entsprechenden elektronischen Nachbearbeitungseinrichtung (50) in die beiden Beobachtungsräume gesplittet werden.

4. Verfahren nach einem der Ansprüche 1 bis 3, **dadurch gekennzeichnet, dass** die gesamte Außenrückspiegelfunktion substituiert wird.

5. Vorrichtung zur Einsichtnahme eines rückwärtigen auf einen einzelnen Außenspiegel bezogenen Beobachtungsraumes bei Kraftfahrzeugen, welche eine Bilderfassungseinrichtung mit mindestens einem bildaufnehmenden Sensorelement (30) zur Erfassung des Beobachtungsraumes (10, 20) und mindestens eine Anzeigeeinrichtung (40) zur Abbildung des erfassten Beobachtungsraumes umfasst, wobei die Bilderfassungseinrichtung (30a, 30b) so unterteilt ausgeführt ist, dass der außenspiegelbezogene Beobachtungsraum gleichzeitig in mindestens zwei Beobachtungsräume (10, 20) unterteilt ist, wobei die Beobachtungsräume unterschiedliche Winkelbereiche überstreichen, **dadurch gekennzeichnet, dass** der sich direkt seitlich an das Kraftfahrzeug anschließende erste Beobachtungsraum (10) einen kleineren Winkelbereich der Fahrzeugumgebung erfasst, als der sich an den ersten Beobachtungsraum anschließende zweite Beobachtungsraum (20), wobei eine Verarbeitungseinrichtung (50) vorgesehen ist, welche die Ausgangssignale des mindestens einen bildaufnehmenden Sensorelementes (30) derart verarbeitet, dass die beiden Beobachtungsräume (10, 20) auf der Anzeigeeinrichtung (40) zu den von ihnen überstrichenen Winkelbereichen in einem umgekehrt proportionalen Breitenverhältnis anzeigbar sind.

6. Vorrichtung nach Anspruch 5, **dadurch gekennzeichnet, dass** für jeden der Beobachtungsräume (10, 20) ein bildaufnehmendes Sensorelement (30a, 30b) vorgesehen ist.

7. Vorrichtung nach Anspruch 6, **dadurch gekennzeichnet, dass** ein bildaufnehmendes Sensorelement (30) für mindestens zwei Beobachtungsräume (10, 20) vorgesehen ist und die erfassten Bildsignale mittels einer optischen Einrichtung und einer entsprechenden elektronischen Nachbearbeitungseinrichtung (50) den beiden Beobachtungsräume (10, 20) zuordbar sind.

## Claims

1. Method for inspecting the rear observation space of a vehicle, which space is based on an individual outside mirror, in which the said observation space (10, 20) is recorded via an image acquisition device having at least one image-recording sensor element (30) and is depicted on at least one display device (40), wherein the image acquisition device is designed in a divided manner such that the observation space based on the outside mirror is divided at the same time into at least two observation spaces (10, 20) which cover different angular regions, **characterized in that** the first observation space (10) which directly laterally adjoins the motor vehicle covers a smaller angular region than the second observation space (20) adjoining the first observation space, wherein the two observation spaces (10, 20) are displayed on the display device (40) in an inversely proportional width ratio with respect to the angular regions covered by them.

2. Method according to Claim 1, **characterized in that** the observation spaces (10, 20) are recorded separately from each other.

3. Method according to Claim 1, **characterized in that** the observation spaces (10, 20) are recorded together and are split into the two observation spaces by means of an optical device and a corresponding electronic reworking device (50).

4. Method according to one of Claims 1 to 3, **characterized in that** the entire outside rear view mirror function is substituted.

5. Apparatus for inspecting the rear observation space of a vehicle, which space is based on an individual outside mirror, which apparatus comprises an image acquisition device with at least one image-recording sensor element (30) for recording the observation space (10, 20) and at least one display device (40) for depicting the recorded observation space, wherein the image acquisition device (30a, 30b) is designed in a divided manner such that the observation space based on the outside mirror is simultaneously divided into at least two observation spaces (10, 20), the observation spaces covering different angular regions, **characterized in that** the first observation space (10) directly laterally adjoining the motor vehicle covers a smaller, angular region of the vehicle surroundings than the second observation space (20) adjoining the first observation space, wherein a processing device (50) is provided, which processes the starting signals of the at least one image-recording sensor element (30) in such a manner that the two observation spaces (10, 20) can be displayed on the display device (40) in an inversely proportional width ratio with respect to the angular regions covered by them.

6. Apparatus according to Claim 5, **characterized in that** an image-recording sensor element (30a, 30b) is provided for each of the observation spaces (10, 20).

7. Apparatus according to Claim 6, **characterized in that** an image-recording sensor element (30) is provided for at least two observation spaces (10, 20), and the recorded image signals can be assigned to the two observation spaces (10, 20) by means of an optical device and a corresponding electronic reworking device.

## Revendications

1. Procédé de consultation d'un espace d'observation arrière se rapportant à un rétroviseur extérieur unique sur des véhicules automobiles, avec lequel ledit espace d'observation (10, 20) est acquis par le biais d'un dispositif d'acquisition d'image comprenant au moins un élément détecteur (30) enregistrant des images et est représenté sur au moins un dispositif d'affichage (40), le dispositif d'acquisition d'image étant divisé de telle sorte que l'espace d'observation en rapport avec le rétroviseur extérieur est simultanément divisé en au moins deux espaces d'observation (10, 20) qui balayent des plages angulaires différentes, **caractérisé en ce que** le premier espace d'observation (10) qui vient se rattacher directement sur le côté du véhicule automobile fait l'acquisition d'une plage angulaire plus petite que celle du deuxième espace d'observation (20) qui vient se rattacher au premier espace d'observation, les deux espaces d'observation (10, 20) étant affichés sur le dispositif d'affichage (40) dans un rapport de largeur inversement proportionnel à celui des plages angulaires qu'ils englobent.

2. Procédé selon la revendication 1, **caractérisé en ce que** les espaces d'observation (10, 20) sont acquis séparément l'un de l'autre.

3. Procédé selon la revendication 1, **caractérisé en ce que** les espaces d'observation (10, 20) sont acquis ensemble et fractionnés en les deux espaces d'observation au moyen d'un dispositif optique et d'un dispositif électronique (50) de traitement ultérieur correspondant.

4. Procédé selon l'une des revendications 1 à 3, **caractérisé en ce que** l'ensemble de la fonction de rétroviseur extérieur est substituée.

5. Dispositif de consultation d'un espace d'observation arrière se rapportant à un rétroviseur extérieur unique sur des véhicules automobiles, lequel comprend un dispositif d'acquisition d'image comprenant au moins un élément détecteur (30) enregistrant des images pour acquérir l'espace d'observation (10, 20) et au moins un dispositif d'affichage (40) pour représenter l'espace d'observation acquis, le dispositif d'acquisition d'image (30a, 30b) étant divisé de telle sorte que l'espace d'observation en rapport avec le rétroviseur extérieur est simultanément divisé en au moins deux espaces d'observation (10, 20), les espaces d'observation balayant des plages angulaires différentes, **caractérisé en ce que** le premier espace d'observation (10) qui vient se rattacher directement sur le côté du véhicule automobile englobe une plage angulaire de l'environnement du véhicule plus petite que celle du deuxième espace d'observation (20) qui vient se rattacher au premier espace d'observation, dans lequel il est prévu un dispositif de traitement (50) qui traite les signaux de sortie de l'au moins un élément détecteur (30) enregistrant des images de telle sorte que les deux espaces d'observation (10, 20) peuvent être affichés sur le dispositif d'affichage (40) dans un rapport de largeur inversement proportionnel à celui des plages angulaires qu'ils balayent.

6. Dispositif selon la revendication 5, **caractérisé en ce qu'**un élément détecteur (30a, 30b) enregistrant des images est prévu pour chacun des espaces d'observation (10, 20).

7. Dispositif selon la revendication 6, **caractérisé en ce qu'**un élément détecteur (30) enregistrant des images est prévu pour au moins deux espaces d'observation (10, 20) et les signaux d'image acquis peuvent être associés aux deux espaces d'observation (10, 20) au moyen d'un dispositif optique et d'un dispositif électronique (50) de traitement ultérieur correspondant.
